# EUROPEAN PATENT SPECIFICATION

(11) **EP 1 857 335 B1**
(45) Date of publication and mention of the grant of the patent: **11.08.2010**
(21) Application number: 06252568.8
(22) Date of filing: 17.05.2006
(51) Int. Cl.: B60R 25/02, B62D 5/06, B62K 5/00, B62H 5/00, B62H 5/02

(54) **Steering lock mechanism for all-terrain vehicle**
Vorrichtung zur Lenkungsverriegelung eines Geländefahrzeugs
Dispositif de verrouillage de la colonne de direction pour véhicule tout-terrain

(43) Date of publication of application: 21.11.2007
(73) Proprietor: Kwang Yang Motor Co., Ltd., Kaohsiung (TW)
(72) Inventor: Lan, Tzu-Jung, Kaohsiung City (TW)
(74) Representative: Hague, Alison Jane

(56) References cited:
- DE-A1- 4 336 601
- FR-A- 1 114 265
- GB-A- 2 274 438
- US-A- 4 653 296

## Description

This invention relates to a steering lock mechanism, and more particularly to a steering lock mechanism that is mounted to a frame of an all-terrain vehicle for preventing rotation of a handle and front wheels of the all-terrain vehicle.

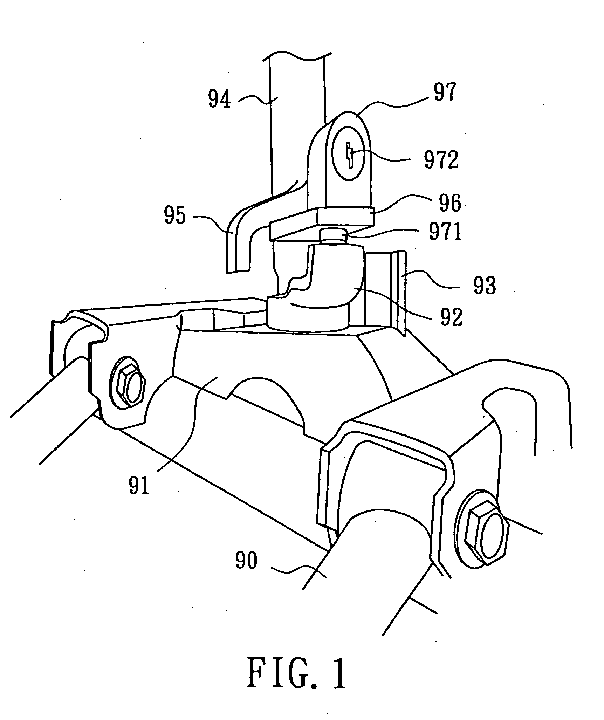

Referring to Fig. 1, a first conventional steering lock mechanism for an all-terrain vehicle includes a base 91, a limiting plate 92 disposed fixedly on the base 91, a bolt-engaging member 93 disposed fixedly on the base 91, a steering shaft 94 journalled on the base 91, a stop plate 95 welded to the steering shaft 94, a mounting seat 96 welded to the steering shaft 94 and disposed directly above the limiting plate 92 and the bolt-engaging member 93, and a lock 97 disposed on the mounting seat 96. The lock 97 includes an extendible and retractable lock bolt 971 and a keyhole 972. A key (not shown) can be inserted into the keyhole 972 in the lock 97 and rotated so as to move the lock bolt 971 into a space between two vertical walls of the bolt-engaging member 93, thereby preventing rotation of the steering shaft 94.

Since the lock 97 is disposed on the mounting seat 96, and since the mounting seat 96 is welded to the steering shaft 94, the steering lock mechanism has a large volume and a large space is required for rotation of the lock 97 and the steering shaft 94. Furthermore, when the stop plate 95 rotates to contact the limiting plate 92, the resulting transmission of vibrations and the inertia of the mounting seat 96 and the lock 97 after the steering shaft 94 has stopped may result in breakage of the welding joint between the mounting seat 96 and the steering shaft 94 and/or malfunction of the lock 97.

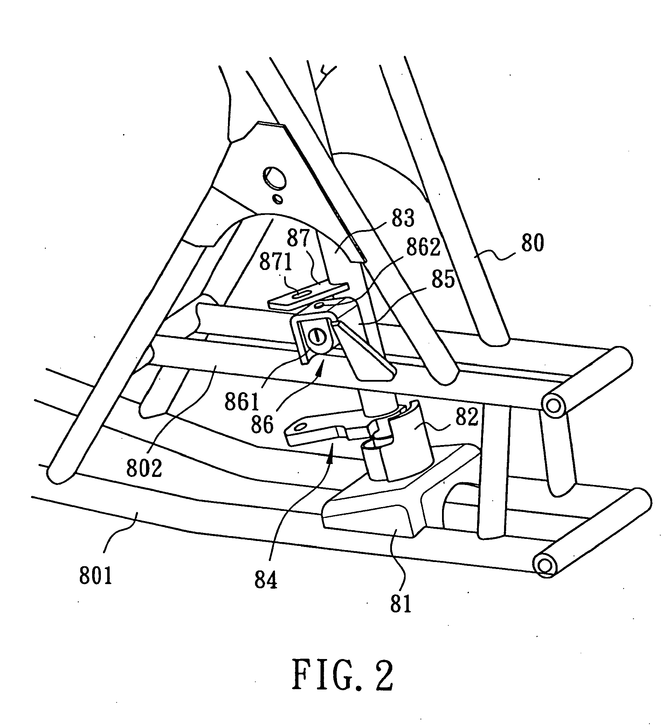

Referring to Fig. 2, a second conventional steering lock mechanism is mounted to a frame 80 of an all-terrain vehicle (not shown). The frame 80 includes two first supporting rods 801 disposed in proximity to the ground, and two second supporting rods 802 disposed directly above the first supporting rods 801. The steering lock mechanism includes a base 81 disposed fixedly on the first supporting rods 801, a limiting plate 82 disposed fixedly on the base 81, a steering shaft 83 journalled on the base 81 and connected fixedly to a handle (not shown), a stop plate 84 welded to the steering shaft 83, a mounting seat 85 disposed fixedly on the second supporting rods 802 and directly above the stop plate 84, a lock 86 disposed on the mounting seat 85, and a latch seat 87 welded to the steering shaft 83 and disposed directly above the lock 86. The lock 86 includes a lock body 861 and an extendible and retractable lock bolt 862. The latch seat 87 is formed with a hole 871.

To insert the lock bolt 862 into the hole 871 in the latch seat 87, it is necessary to rotate the handle so as to align the lock bolt 862 with the hole 871 in the latch seat 87. This is often a troublesome procedure for the user to perform.

A steering lock mechanism according to the preamble of Claim 1 is known from DE 43 36 601 A1.

An object of this invention is to provide a steering lock mechanism for an all-terrain vehicle, which is compact and which has a low lock failure rate.

Another object of this invention is to provide a steering lock mechanism for an all-terrain vehicle, which can be operated easily and conveniently.

According to this invention, a steering lock mechanism includes a base disposed fixedly on a frame of an all-terrain vehicle, a steering shaft journalled on the base, a limiting member disposed fixedly on the base, a stop member, a lock, and a latch seat. The stop member and the latch seat are disposed fixedly on the steering shaft and directly above the lock. The stop member is co-rotatable with the steering shaft in a predetermined direction to contact the limiting member, after which a lock bolt of the lock can be moved upwardly into latch seat so as to prevent rotation of the steering shaft relative to the frame

Since the lock is not disposed on the steering shaft, a space required for rotation of the steering shaft and the failure rate of the lock are reduced.

Furthermore, when the stop member comes into contact with the limiting member, the lock bolt is aligned with and movable into the latch seat. As such, the steering lock mechanism can be operated easily and conveniently.

These and other features and advantages of this invention will become apparent in the following detailed description of a preferred embodiment of this invention, with reference to the accompanying drawings, in which:
Fig. 1 is a perspective view of a first conventional steering lock mechanism;
Fig. 2 is a perspective view of a second conventional steering lock mechanism;
Fig. 3 is a perspective view of the preferred embodiment of a steering lock mechanism according to this invention when it is unlocked; and
Fig. 4 is a perspective view of the preferred embodiment when it is locked.

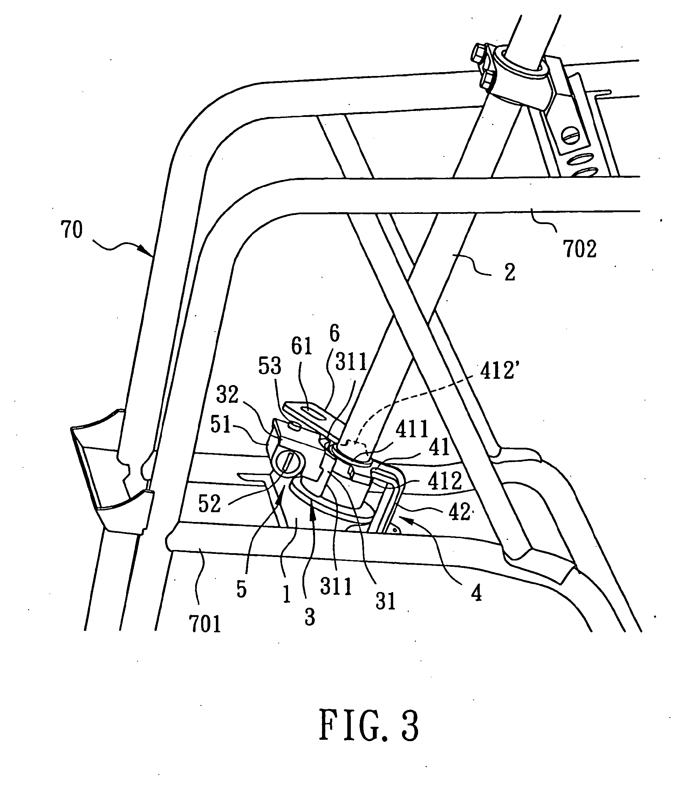

Referring to Fig. 3, the preferred embodiment of a steering lock mechanism according to this invention is mounted to a frame 70 of an all-terrain vehicle (not shown) for preventing rotation of a handle and two front wheels of the all-terrain vehicle. The frame 70 includes two supporting rods 701 disposed in proximity to the ground.

The steering lock mechanism includes a base 1, a steering shaft 2, a limiting member 3, a stop member 4, a lock 5, and a latch seat 6 configured as a plate.

The base 1 is disposed fixedly on the supporting rods 701.

The steering shaft 2 has a lower end journalled on the base 1, and an upper end connected fixedly to the handle.

The limiting member 3 is disposed fixedly on the base 1, and includes a limiting portion 31 and a lock-mounting portion 32 connected fixedly to the limiting portion 31. The limiting portion 31 is configured as a curved upright wall, and has two opposite end surfaces 311.

The stop member 4 is disposed fixedly on the steering shaft 2, and includes a stop portion 41 and a connecting portion 42. The stop portion 41 includes a connecting ring 411 sleeved fixedly on the steering shaft 2, and a pair of left and right stop blocks 412, 412' extending integrally from the connecting ring 411 away from each other. As such, the left and right stop blocks 412, 412' are connected respectively and fixedly to two opposite sides of the steering shaft 2. Each of the left and right stop blocks 412, 412' is co-rotatable with the steering shaft 2 to contact the corresponding end surface 311 of the limiting member 3 so as to prevent further rotation of the steering shaft 2 relative to the base 1. The connecting portion 42 has an upper end connected fixedly to the stop portion 41, and a lower end connected fixedly to the front wheels by two driving rods (not shown), respectively.

The latch seat 6 is disposed fixedly on the steering shaft 2 and directly above the lock 5, and is formed with a hole 61 therethrough.

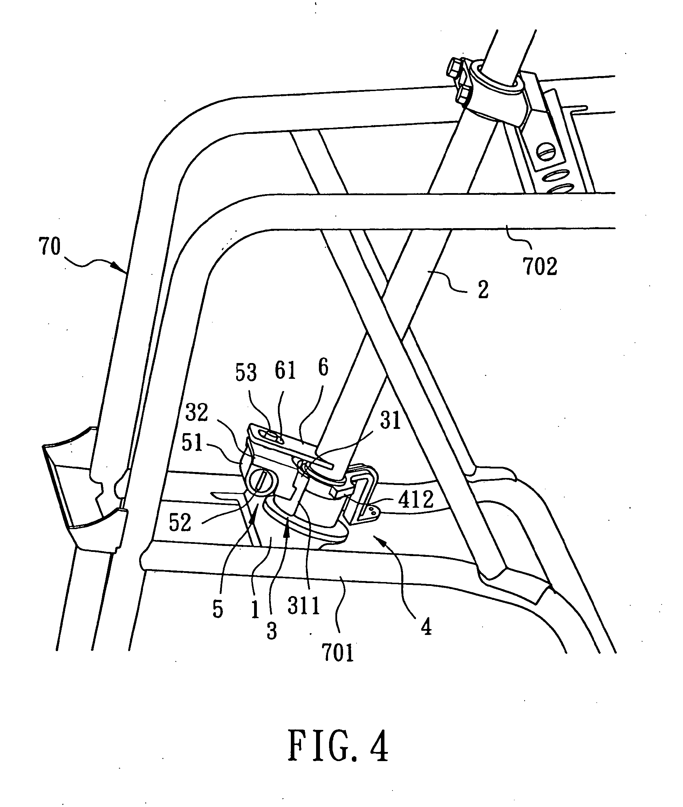

The lock 5 includes a lock body 51 disposed fixedly on the lock-mounting portion 32 of the limiting member 3 and formed with a keyhole 52, and a lock bolt 53 disposed movably within the lock body 51. To convert the steering lock mechanism into a locking state shown in Fig. 4, the handle and the steering shaft 2 are rotated first in a predetermined direction (i.e., turned to the left) until the right stop block 412' of the stop member 4 comes into contact with the corresponding end surface 311 of the limiting member 3. Subsequently, a key (not shown) is inserted into the keyhole 52 in the lock body 51 and rotated to thereby allow the lock bolt 53 to project upwardly from the lock body 51 into the hole 61 in the latch seat 6. As a consequence, rotation of the steering shaft 2 relative to the base 1 can be prevented.

Since the lock 5 is not disposed on the steering shaft 2, a space required for rotation of the steering shaft 2 and the failure rate of the lock 5 are reduced.

Furthermore, when the right stop block 412' of the stop member 4 comes into contact with the limiting member 3, the lock bolt 53 is aligned with and movable into the hole 61 in the latch seat 6. As such, the steering lock mechanism of this invention can be operated easily and conveniently. Thus, the objects of this invention can be achieved.

## Claims

1. A steering lock mechanism for an all-terrain vehicle, the all-terrain vehicle having a frame (70), the steering lock mechanism including:
a base (1) disposed fixedly on the frame (70);
a steering shaft (2) journalled on the base (1);
a limiting member (3) disposed fixedly on the base (1);
a stop member (4) disposed fixedly on the steering shaft (2) and co-rotatable with the steering shaft (2) to contact the limiting member (3) so as to prevent further rotation of the steering shaft (2) relative to the base (1);
a latch seat (6); and
a lock (5) having a lock body (51), and a lock bolt (53) disposed movably within the lock body (51) and operable to project from the lock body (51) into the latch seat (6) so as to prevent rotation of the steering shaft (2) relative to the base (1);
**characterized by**:
the latch seat (6) being disposed fixedly on the steering shaft (2) and directly above the lock (5); and
the lock body (51) of the lock (5) being disposed fixedly on the limiting member (3) and positioned so as to allow the lock bolt (53) to move into the latch seat (6) when the steering shaft (2) is rotated in a predetermined direction so as to allow the stop member (4) to come into contact with the limiting member (3) and when the lock bolt (53) is operated to project upwardly from the lock body (51) into the latch seat (6).

2. The steering lock mechanism as claimed in Claim 1, **characterized in that** the limiting member (3) has a limiting portion (31) configured as a curved upright wall and having two opposite end surfaces (311), the stop member (4) including a pair of left and right stop blocks (412, 412') that are connected respectively and fixedly to two opposite sides of the steering shaft (2) and that are pivotable to contact respectively said end surfaces (311) of the limiting member (3).

3. The steering lock mechanism as claimed in Claim 2, further **characterized in that** the stop member (4) further includes a connecting ring (411) sleeved fixedly on the steering shaft (2), the left and right stop blocks (412, 412') extending integrally and respectively from the connecting ring (411) away from each other.

4. The steering lock mechanism as claimed in Claim 1, 2 or 3 **characterized in that** the latch seat (6) is configured as a plate, and is formed with a hole (61) therethrough, the lock bolt (53) being movable into the hole (61) in the latch seat (6).

## Patentansprüche

1. Lenkschlossmechanismus für ein Geländefahrzeug, wobei das Geländefahrzeug einen Rahmen (70) aufweist, wobei der Lenkschlossmechanismus aufweist:
eine Basis (1), die fest an den Rahmen (70) angebracht ist;
ein Lenkrohr bzw. eine Lenkwelle (2), das bzw. die an der Basis (1) gelagert ist;
ein Begrenzungsglied (3), das fest an der Basis angebracht ist;
ein Stoppglied (4), das fest an das Lenkrohr (2) angebracht ist und mit dem Lenkrohr (2) mitrotierbar ist, um das Begrenzungsglied (3) zu berühren, um eine weitere Rotation des Lenkrohres (2) relativ zu der Basis (1) zu verhindern;
einen Riegelsitz (6); und
ein Schloss (5) mit einem Schlosskörper (51), und einen Schlossbolzen (53), der in dem Schlosskörper (51) bewegbar angeordnet und ausgebildet ist, um von dem Schlosskörper (51) in den Riegelsitz (6) vorzustehen, um eine Rotation des Lenkrohres (2) relativ zu der Basis (1) zu verhindern;
**dadurch gekennzeichnet, dass:**
der Riegelsitz (6) fest an dem Lenkschloss (2) und direkt über dem Schloss (5) angebracht ist; und
der Schlosskörper (51) des Schlosses (5) fest an dem Begrenzungsglied (3) angebracht und so positioniert ist, um dem Schlossbolzen (53) zu ermöglichen, sich in den Riegelsitz (6) zu bewegen, wenn das Lenkrohr (2) in eine vorgegebene Richtung rotiert wird, um dem Stoppglied (4) zu ermöglichen mit dem Begrenzunsglied (3) in Kontakt zu kommen und wenn der Schlossbolzen (53) bedient ist, um von dem Schlosskörper (51) aufwärts in den Riegelsitz (6) vorzustehen.

2. Lenkschlossmechanismus nach Anspruch 1, **dadurch gekennzeichnet, dass** das Begrenzungsglied (3) einen Begrenzungsabschnitt (31) aufweist, der als eine gebogene hochstehende bzw. senkrechte Wand ausgebildet ist und zwei gegenüberliegende Endflächen (311) aufweist, wobei das Stoppglied (4), das ein Paar von linken und rechten Stoppblöcken (412, 412') aufweist, die jeweils und fest mit den zwei gegenüberliegenden Seiten des Lenkrohres (2) verbunden sind und die drehbar sind, um die jeweiligen Endflächen (311) des Begrenzungsgliedes (3) zu berühren.

3. Lenkschlossmechanismus nach Anspruch 2, ferner **dadurch gekennzeichnet, dass** das Stoppglied (4) ferner einen Verbindungsring (411) aufweist, der das Lenkschloss (2) fest umhüllt, wobei sich der linke und rechte Stoppblock (412, 412') einstückig und jeweils von dem Verbindungsring (411) weg voneinander erstrecken.

4. Lenkschlossmechanismus nach Anspruch 1, 2 oder 3, **dadurch gekennzeichnet, dass** der Riegelsitz (6) als Platte konfiguriert und mit einem Loch (61) ausgebildet ist, wobei der Schlossbolzen (53) in das Loch (61) in dem Riegelsitz (6) bewegbar ist.

## Revendications

1. Mécanisme de blocage de direction pour un véhicule tout-terrain, le véhicule tout-terrain ayant un châssis (70), le mécanisme de blocage de direction incluant :
une base (1) disposée de manière fixe sur le châssis (70) ;
un arbre de direction (2) tourillonné sur la base (1) ;
un élément limiteur (3) disposé de manière fixe sur la base (1) :
un élément de butée (4) disposé de manière fixe sur l'arbre de direction (2) et pouvant tourner conjointement avec l'arbre de direction (2) pour entrer en contact avec l'élément limiteur (3) de manière à empêcher une rotation supplémentaire de l'arbre de direction (2) par rapport à la base (1) ;
une embase de verrou (6) ; et
un dispositif de blocage (5) ayant un corps de blocage (51) et un boulon de blocage (53) disposé de manière mobile à l'intérieur du corps de blocage (51) et pouvant être actionné pour faire saillie à partir du corps de blocage (51) dans l'embase de verrou (6) de manière à empêcher une rotation de l'arbre de direction (2) par rapport à la base (1) ;
**caractérisé en ce que :**
l'embase de verrou (6) est disposée de manière fixe sur l'arbre de direction (2) et directement au-dessus du dispositif de blocage (5) ; et
le corps de blocage (51) du dispositif de blocage (5) est disposé de manière fixe sur l'élément limiteur (3) et positionné de manière à permettre au boulon de blocage (53) de se déplacer dans l'embase de verrou (6) lorsque l'arbre de direction (2) tourne dans une direction prédéterminée pour permettre à l'élément de butée (4) de venir en contact avec l'élément limiteur (3), et lorsque le boulon de blocage (53) est actionné, pour faire saillie vers le haut à partir du corps de blocage (51) dans l'embase de verrou (6).

2. Mécanisme de blocage de direction tel que revendiqué dans la revendication 1, **caractérisé en ce que** l'élément limiteur (3) a une partie de limitation (31) configurée sous la forme d'une paroi verticale courbe et ayant deux surfaces d'extrémité opposées (311), l'élément de butée (4) incluant une paire de blocs de butée gauche et droit (412, 412') qui sont reliés respectivement et fixement à deux côtés opposés de l'arbre de direction (2), et qui peuvent pivoter pour entrer respectivement en contact avec lesdites surfaces d'extrémité (311) de l'élément limiteur (3).

3. Mécanisme de blocage de direction tel que revendiqué dans la revendication 2, également **caractérisé en ce que** l'élément de butée (4) inclut en outre une bague de liaison (411) manchonnée de manière fixe sur l'arbre de direction (2), les blocs de butée gauche et droit (412, 412') s'étendant d'un seul tenant et respectivement à partir de la bague de liaison (411) en s'éloignant l'un de l'autre.

4. Mécanisme de blocage de direction tel que revendiqué dans la revendication 1, 2 ou 3, **caractérisé en ce que** l'embase de verrou (6) est configurée sous la forme d'une plaque, et est formée munie d'un trou (61) à travers celle-ci, le boulon de blocage (53) étant mobile dans le trou (61) de l'embase de verrou (6)-.
